# EUROPÄISCHE PATENTSCHRIFT

(11) **EP 3 008 455 B1**
(45) Veröffentlichungstag und Bekanntmachung des Hinweises auf die Patenterteilung: **15.04.2020**
(21) Anmeldenummer: 14728125.7
(22) Anmeldetag: 26.05.2014
(51) Int. Cl.: G01N 21/956

(54) **ERFASSUNGSSYSTEM ZUM ERFASSEN EINER LÖTVERBINDUNG**
DETECTION SYSTEM FOR DETECTING A SOLDERED JOINT
SYSTÈME DE DÉTECTION D'UNE LIAISON SOUDÉE

(30) Priorität: 14.06.2013 DE 102013211090
(43) Veröffentlichungstag der Anmeldung: 20.04.2016
(73) Patentinhaber: Robert Bosch GmbH, 70442 Stuttgart (DE)
(72) Erfinder: BRAUN, Marco, 74626 Bretzfeld (DE); HUNDERT, Torsten, 38259 Salzgitter (DE); SCHELLER, Stefan, 71701 Schwieberdingen (DE)
(86) Internationale Anmeldenummer: PCT/EP2014/060754
(87) Internationale Veröffentlichungsnummer: WO 2014/198520

(56) Entgegenhaltungen:
- EP-A2- 2 241 878
- WO-A1-2012/101943
- US-A1- 2001 012 107

## Beschreibung

### Stand der Technik

Die Erfindung betrifft ein Erfassungssystem zum Erfassen einer Lötverbindung eines elektronischen Bauelements, insbesondere eines integrierten Schaltkreises. Das Bauelement weist ein quaderförmiges Gehäuse auf. Das Erfassungssystem weist eine Erfassungsvorrichtung mit einem Sender für elektromagnetische Strahlen und einen Detektor für die elektromagnetischen Strahlen auf. Die Erfassungsvorrichtung ist ausgebildet, mit dem Sender elektromagnetische Strahlen zu erzeugen und auf das Bauelement zu senden. Der Detektor ist angeordnet und ausgebildet, von dem Bauelement reflektierte elektromagnetische Strahlen zu erfassen und einen die reflektierten Strahlen repräsentierenden Bilddatensatz zu erzeugen.

Bei aus dem Stand der Technik bekannten Erfassungsvorrichtungen zur Beurteilung der Qualität von elektronischen Schaltungen, auch AOI-Vorrichtung genannt, besteht das Problem, dass Lötstellen von integrierten Schaltkreisen, welche ein gesägtes Gehäuse aufweisen, nur schwierig erfasst werden können.

Aus der Offenlegungsschrift US2001/012107 A1 ist eine Vorrichtung bekannt, welche eine nicht intakte Lötstelle ausgehend von einer Referenzkante eines Anschlusses eines Bauelements erfassen kann.

### Offenbarung der Erfindung

Erfindungsgemäß ist die Erfassungsvorrichtung ausgebildet, aus dem Bilddatensatz wenigstens einen eine Kante des Bauelements repräsentierenden Kanten-datensatz zu erzeugen und im Bereich des Kantendatensatzes, insbesondere eines die Kante repräsentierenden Bildbereiches des Bilddatensatzes, wenigstens einen eine Lötstelle repräsentierenden Teil des Bilddatensatzes zu ermitteln und in Abhängigkeit eines Intensitätswerts, insbesondere Helligkeits- oder Grauwerts des Teils des Bilddatensatzes ein eine Qualität der Lötstelle repräsentierendes Qualitätssignal zu erzeugen und auszugeben.

Bevorzugt ist das Erfassungssystem, insbesondere die Erfassungsvorrichtung des Erfassungssystems der eingangs genannten Art ausgebildet, ausgehend von einer erfassten Kante des Bauelements eine Lötstelle zu lokalisieren, mit der das Bauelement mit der Leiterplatte verbunden ist. Vorteilhaft kann so auch eine Lötstelle erfasst werden, bei der der elektrische Kontakt des Bauelements sich auf einer zur Leiterplatte gewandten Seite, insbesondere einer Unterseite des Bauelements, befindet. Wenn die Lötstelle, welche eine Leiterbahn der Leiterplatte mit dem Kontakt des Bauelements verbindet, fehlerhaft ist, so wird der Kontakt des Bauelements nur teilweise oder unzureichend mit Lotmittel benetzt, sodass sich unter dem Bauelement an dem Kontakt eine Lotkugel befindet.

Im Falle einer intakten Lötstelle zieht sich das Lot von dem Kontakt bis hin zu einer Leiterbahn und ist so in einer Aufsicht auf die Leiterplatte sichtbar oder kann durch eine automatische Erfassungsvorrichtung erfasst werden. Die Kante des Bauelements kann jedoch vorteilhaft als Referenz- und Ausgangsort zur Lokalisation der Lötstellen von der Erfassungsvorrichtung erfasst werden, wodurch die Erfassung der Lötstellen auch bei einer Toleranz der Positionierung des Bauelements auf der Leiterplatte noch sicher erfolgen kann.

Bevorzugt weist die Erfassungsvorrichtung eine Mustererfassungseinheit auf. Die Mustererfassungseinheit ist ausgebildet, die Kante - insbesondere mittels einer Polynomapproximation eines Polynoms ersten Grades - zu ermitteln. Bevorzugt ist die Mustererfassungseinheit ausgebildet, die Kante mittels einer RLS-Approximation (RLS = Root-Least-Square) zu ermitteln.

Das Erfassungssystem umfasst wenigstens ein elektronisches Bauelement, insbesondere den integrierten Schaltkreis mit dem quaderförmigen, beispielsweise gesägtem Gehäuse. Das Bauelement ist mit einer Leiterplatte lötverbunden. Ferner weist das Bauelement auf einer von der Leiterplatte abweisenden Seite von der Kante ausgehend eine die elektromagnetischen Strahlen reflektierende Beschichtung auf. Dadurch kann die Kante mittels der Erfassungsvorrichtung vorteilhaft sicher erfasst werden. Die Beschichtung, welche vorteilhaft bis zur Kante hinreicht, kann so ein sicheres Erkennungsmittel, insbesondere ein Kontrastmittel zum Erfassen der Kante bilden.

Es wurde nämlich erkannt, dass Schriftzüge, welche üblicherweise auf das Gehäuse des Bauelements aufgedruckt sind, keine hinreichend genaue Positionsbestimmung des Bauelements auf der Leiterplate und so keinen hinreichend genauen Ausgangsort zum Lokalisieren einer Lötstelle bilden können, mit der das Bauelement mit der Leiterplatte verbunden ist.

Die Beschichtung weist ein Farbpigment, insbesondere Titandioxid, auf. Vorteilhaft kann die Beschichtung so einfach, und ohne einen Anspruch an eine hinreichende Genauigkeit, auf die Seite des Bauelements, welche von der Leiterplatte abweist, aufgetragen werden. Die Kante des Bauelements erzeugt so in dem Farbbild eines Druckauftrags der Beschichtung die Referenzlinie, von der ausgehend Lötstellen von der Erfassungsvorrichtung lokalisiert werden können.

In einer bevorzugten Ausführungsform ist die Beschichtung fluoreszierend ausgebildet. Weiter bevorzugt ist der Sender für die elektromagnetischen Strahlen ausgebildet, fluoreszenzerzeugende Strahlen - bevorzugt unabhängig von Nicht-Fluoreszenzerzeugenden Strahlen - zu erzeugen. So kann vorteilhaft durch Bestrahlen der Leiterplatte mit der fluoreszenzerzeugenden Strahlung, insbesondere UV-Strahlen, die Kante des Bauelements erfasst werden. Zur Lokalisation der Lötstellen und einer weiteren Beurteilung der Qualität der Lötstelle kann von der Erfassungsvorrichtung Strahlung im sichtbaren Bereich, insbesondere im Wellenlängenbereich zwischen 400 und 800 Nanometer gesendet werden.

Bevorzugt weist die Leiterplatte, welche mit dem Bauelement verbunden ist, nur im Bereich der Kante des Bauelements die fluoreszierend ausgebildete Beschichtung auf. So kann vorteilhaft die Kante mittels des so gebildeten Alleinstellungskriteriums sicher erfasst werden.

Die Erfindung betrifft auch ein Verfahren zum Erfassen einer defekten Lötstelle eines quaderförmigen Bauelements, das mit einer Leiterplatte lötverbunden ist.

Bei dem Verfahren werden auf die Leiterplatte elektromagnetische Strahlen gesendet und wenigstens von dem Bauelement, bevorzugt zusätzlich von der Leiterplatte reflektierte elektromagnetische Strahlen erfasst. Weiter wird ein die reflektierten Strahlen repräsentierender Bilddatensatz erzeugt, und in dem Bilddatensatz ein eine Kante des Bauelements repräsentierender Teil des Bilddatensatzes erfasst, weiter bevorzugt ein dem Teil entsprechender Kanten-Datensatz erzeugt. Ausgehend von dem die Kante repräsentierenden Teil des Bilddatensatzes wird eine Qualität einer Lötstelle ermittelt.

In einer bevorzugten Ausführungsform des Verfahrens wird ausgehend von der Kante die Qualität der Lötstelle in Abhängigkeit eines Intensitätswertes eines die Lötstelle repräsentierenden Teils des Bilddatensatzes ermittelt. Weiter bevorzugt wird ein I-O-Signal (I-O = In Ordnung) oder N-I-O-Signal (N-I-O = Nicht In Ordnung) in Abhängigkeit der ermittelten Qualität der Lötstelle erzeugt und ausgegeben.

Das Bauelement weist auf einer von der Leiterplatte abweisenden Seite ausgehend von der Kante eine die elektromagnetischen Strahlen reflektierende Beschichtung auf.

In einer bevorzugten Variante weist das Bauelement auf einer von der Leiterplatte abweisenden Seite ausgehend von der Kante eine fluoreszierende Beschichtung auf. Dazu kann die zuvor erwähnte reflektierende Beschichtung zusätzlich fluoreszierend ausgebildet sein.

Bevorzugt werden zum Erfassen der Kante Fluoreszenz erzeugende Strahlen, insbesondere UV-Strahlen, erzeugt, und auf die Leiterplatte und das Bauelement gesendet. Bevorzugt wird daraufhin die Kante in Abhängigkeit von der Beschichtung emittierten Fluoreszenzstrahlen erfasst.

Die Erfindung wird nun im Folgenden anhand von Figuren und weiteren Ausführungsbeispielen beschrieben. Weitere vorteilhafte Ausführungsformen ergeben sich aus den in den Figuren und den abhängigen Ansprüchen beschriebenen Merkmalen.
Figur 1 zeigt ein Ausführungsbeispiel für ein Erfassungssystem, welches ausgebildet ist, mittels elektromagnetischen Strahlen eine Kante eines Bauelements zu erfassen, und ausgehend von der Kante des Bauelements eine Lötstelle zu erfassen, und die Qualität der Lötstelle zu ermitteln, und ein die Qualität der Lötstelle repräsentierendes Ausgangssignal zu erzeugen;
Figur 2 zeigt ein Beispiel für ein Verfahren zum Erfassen einer defekten Lötstelle.

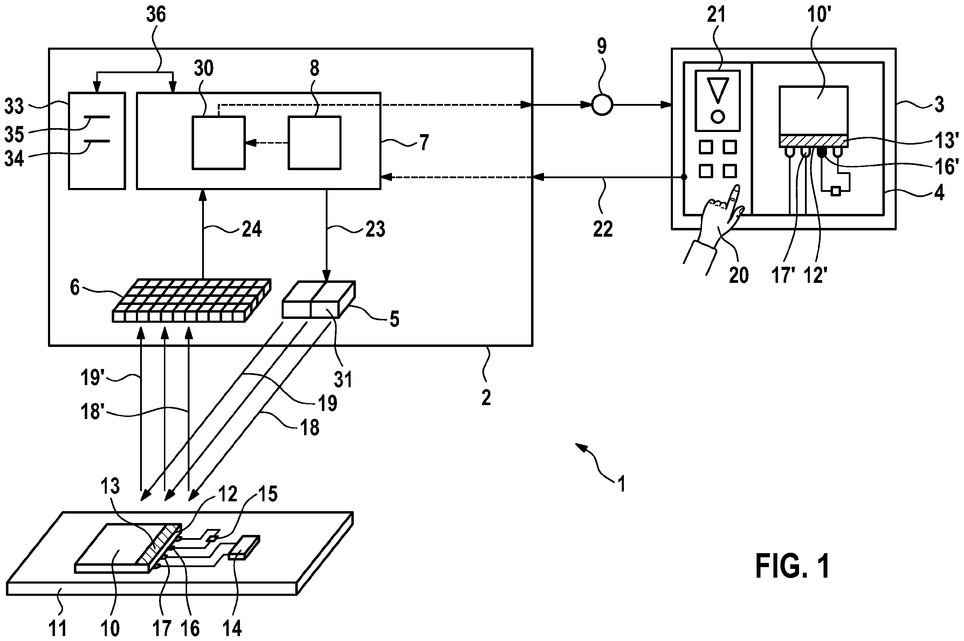

Figur 1 zeigt - schematisch - ein Ausführungsbeispiel für ein Erfassungssystem 1. Das Erfassungssystem 1 weist eine Erfassungsvorrichtung 2 auf. Die Erfassungsvorrichtung 2 ist ausgangsseitig mit einer Benutzerschnittstelle verbunden. Die Benutzerschnittstelle weist eine Bildwiedergabeeinheit 3 auf, welche insbesondere durch ein TFT-Display (TFT = Thin-Film-Transistor) gebildet ist. Die Bildwiedergabeeinheit 3 weist auch eine berührungsempfindliche Oberfläche 4 auf. Die berührungsempfindliche Oberfläche 4 ist ausgebildet, in Abhängigkeit eines Berührens der berührungsempfindlichen Oberfläche 4 ein den Berührungsort repräsentierendes Benutzerinteraktionssignal zu erzeugen und ausgangsseitig auszugeben. Die benutzerempfindliche Oberfläche 4 ist über eine Verbindungsleitung 22 mit der Erfassungsvorrichtung 2 verbunden. Die Erfassungsvorrichtung 2 weist einen Sender 5 für elektromagnetische Strahlen 18 auf. Der Sender 5 ist ausgebildet, elektromagnetische Strahlen 18 zu erzeugen und auszusenden. Der Sender 5 ist beispielsweise durch wenigstens eine Lumineszenzdiode, ein Lumineszenzdiodenfeld umfassend mehrere Lumineszenzdioden oder durch einen Laser, beispielsweise einen Halbleiterlaser, gebildet.

Die Erfassungsvorrichtung 2 weist auch einen Detektor 6 für die elektromagnetischen Strahlen 18 auf, welcher ausgebildet und angeordnet ist, von einer Leiterplatte 11 mit einem Bauelement 10 reflektierte elektromagnetische Strahlen 18' zu empfangen und ein die reflektierten elektromagnetischen Strahlen 18' repräsentierenden Bilddatensatz 34 zu erzeugen und ausgangsseitig auszugeben. Der Detektor 6 weist eine Vielzahl von Matrixelementen auf, wobei jedes Matrixelement ausgebildet ist, in Abhängigkeit eines empfangenen elektromagnetischen Strahls eine Intensität, auch Strahlstärke genannt, des elektromagnetischen Strahls repräsentierendes Ausgangssignal zu erzeugen.

Das Ausgangssignal wird in diesem Ausführungsbeispiel durch den zuvor erwähnten Bilddatensatzes 34 repräsentiert. Der Detektor 6 ist beispielsweise durch einen CCD-Detektor (CCD = Charge-Coupled-Device) gebildet und ausgangsseitig über eine Verbindungsleitung 24 mit einer Verarbeitungseinheit 7 verbunden. Die Verarbeitungseinheit 7, welche beispielsweise durch einen Mikrocontroller oder einen Mikroprozessor gebildet ist, ist ausgebildet, über die Verbindungsleitung 24 den Bilddatensatz 34 zu empfangen, der die Leiterplatte 11 mit dem Bauelement 10 repräsentiert, und den Bilddatensatz 34 in einem über eine Verbindungsleitung 36 mit der Verarbeitungseinheit 7 verbundenen Speicher 33 abzuspeichern.

Die Leiterplatte 11 weist außer dem Bauelement 10 auch ein weiteres elektronisches Bauelement 14, beispielsweise einen integrierten Schaltkreis auf und ein weiteres Bauelement 15, beispielsweise einen Widerstand auf. Das Bauelement 10, welches beispielsweise durch einen Mikroprozessor oder ein FPGA (FPGA = Field-Programmable-Gate-Array) oder ein ASIC (ASIC = Application-Specific-Integrated-Circuit) gebildet ist, weist auf seiner zur Leiterplatte 11 weisenden Seite elektrische Anschlüsse auf. Die elektrischen Anschlüsse sind jeweils mit einem entsprechenden Lötpad, gebildet durch einen Leiterbahnabschnitt einer Leiterbahn der Leiterplatte 11, in einem Reflow-Lötprozess verlötet.

Das Bauelement 10 ist in diesem Ausführungsbeispiel ein Bauelement mit einem gesägten Gehäuse, wobei das Gehäuse eine Quaderform aufweist. Das Gehäuse des Bauelements 10 weist eine Kante 12 auf, welche in einer Aufsicht auf die Leiterplatte 11 und das Bauelement 10 eine Linie, insbesondere eine Gerade, bildet. Die Kante 12, welche in einer Projektion auf die Leiterplatte 11 eine Gerade bildet, sodass die elektrischen Anschlüsse des Bauelements 10, welche zwischen dem Bauelement 10 und der Leiterplatte 11 angeordnet sind, durch das Bauelement 10, insbesondere dessen Gehäuse, abgeschattet, also in einer Aufsicht unsichtbar sind, kann in diesem Ausführungsbeispiel einen Ausgangspunkt für die Erfassungsvorrichtung 2 bilden, um Lötstellen, welche zu den elektrischen Anschlüssen des Bauelements 10 führen, zu erfassen und weiter zu analysieren.

Die Lötstellen führen in diesem Ausführungsbeispiel in einer Aufsicht auf die Leiterplatte 11 von der Kante 12 abweisend weg. Dargestellt ist eine Lötstelle 17, welche mit Lötzinn benetzt ist, und in dem Bilddatensatz, erzeugt durch den Detektor 6, an dem der Lötstelle 17 entsprechenden Ort einen der Lötstelle 17 entsprechenden Intensitätswert der reflektierten elektromagnetischen Strahlen 18 repräsentiert. Dargestellt ist auch eine defekte Lötstelle 16, welche nicht mit Lötzinn benetzt ist und einen Intensitätswert mittels der reflektierten elektromagnetischen Strahlen 18' erzeugt, der der defekten Lötstelle 16 entspricht.

Die Erfassungsvorrichtung 2, insbesondere die Verarbeitungseinheit 7, weist in diesem Ausführungsbeispiel eine Mustererfassungseinheit 8 auf. Die Mustererfassungseinheit 8 ist ausgebildet, in dem vom Detektor 6 erzeugten Bilddatensatz 34 die Kante 12 zu erfassen, und einen die Kante repräsentierenden Kanten-Datensatz zu erzeugen und im Speicher 33 abzuspeichern. Dazu kann die Mustererfassungseinheit 8 beispielsweise ausgebildet sein, die Kante mittels einer Polynomapproximation eines Polynoms ersten Grades zu ermitteln.

Das Bauelement 10 weist auf einer von der Leiterplatte 11 abweisenden Seite im Bereich der Kante 12 eine Beschichtung 13 auf. Die Beschichtung 13 weist in diesem Ausführungsbeispiel Pigmente, beispielsweise Titandioxid, auf. Auf diese Weise kann die Kante 12 von der Erfassungsvorrichtung 2 auf einfache Weise mittels des durch die Kante 12 selbst erzeugten Randbildungskriteriums eines die Beschichtung 13 begrenzenden Randes erzeugen. Die Mustererfassungseinheit 8 kann so mittels des durch die Beschichtung 13 erzeugten Bildkontrastes auf einfache Weise die Kante 12 erfassen. Von der Kante 12 ausgehend kann die Mustererfassungseinheit 8 die Lötstellen wie die Lötstellen 16 und 17 erfassen, welche sich in diesem Ausführungsbeispiel in einer Aufsicht auf die Leiterplatte 11 von der Kante 12 abweisend nach außen erstrecken.

Die Erfassungsvorrichtung 2 ist in diesem Ausführungsbeispiel ausgebildet, den von dem Detektor 6 erfassten Bilddatensatz ausgangsseitig über einen Ausgang 9 an die Bildwiedergabeeinheit 3 zu senden. Die Bildwiedergabeeinheit 3 zeigt das Bauelement 10', für ein menschliches Auge sichtbar, die von der Bildwiedergabeeinheit 3 wiedergegebene Beschichtung 13', welche bis hin zur Kante 12' reicht, die defekte Lötstelle 16' und die intakte Lötstelle 17'. Die Verarbeitungseinheit 7 hat in diesem Ausführungsbeispiel die defekte Lötstelle 16 erfasst und in Abhängigkeit des defekten Erfassungsergebnisses ein Fehlersignal erzeugt und ausgangsseitig über den Ausgang 9 an die Bildwiedergabeeinheit 3 gesendet. Die Bildwiedergabeeinheit 3 zeigt ein Warnsymbol 21, welches signalisiert, dass die Erfassungsvorrichtung 2 eine defekte Lötstelle ermittelt hat.

Die Erfassungsvorrichtung 2 kann beispielsweise mittels eines Benutzerinteraktionssignals, erzeugt durch die berührungsempfindliche Oberfläche 4 - beispielsweise erzeugt von einer Benutzerhand 20 - die Leiterplatte 11 erfassen und dazu den Sender 5 über eine Verbindungsleitung 23 mittels der Verarbeitungseinheit 7 ansteuern, die elektromagnetischen Strahlen 18 zu erzeugen und auszusenden.

Der Sender 5 umfasst in diesem Ausführungsbeispiel zwei zueinander verschiedene Strahlenquellen, nämlich eine Strahlenquelle 31, welche beispielsweise durch wenigstens eine oder mehrere Lumineszenzdioden gebildet ist und welche ausgebildet ist, beispielsweise für ein menschliches Auge weiß wahrnehmbare elektromagnetische Strahlen wie die elektromagnetischen Strahlen 18 zu erzeugen und auszusenden. Der Sender 5 weist in diesem Ausführungsbeispiel auch eine Strahlenquelle 32 auf, welche ausgebildet ist, ultraviolette elektromagnetisehe Strahlen 19 zu erzeugen. Die ultravioletten elektromagnetischen Strahlen 19 weisen beispielsweise eine Wellenlänge von kleiner als 400 Nanometer auf. Beispielsweise ist die Strahlenquelle 32 durch eine Quecksilberdampflampe oder eine Lumineszenzdiode, beispielsweise eine Aluminiumnitrid-Lumineszenzdiode oder Aluminium-Gallium-Nitrid-Lumineszenzdiode gebildet, welche ausgebildet ist, elektromagnetische Strahlen mit einer Wellenlänge zwischen 250 und 365 Nanometer zu erzeugen und auszusenden. Die ultravioletten elektromagnetischen Strahlen 19, welche beispielsweise von einem menschlichen Auge, und in diesem Ausführungsbeispiel vom Detektor 6, nicht erfasst werden können, treffen auf die Beschichtung 13 des Bauelements 10.

Die Beschichtung 13 weist in diesem Ausführungsbeispiel auch wenigstens ein fluoreszierend ausgebildetes Farbpigment auf. Von der Beschichtung 13 können so Fluoreszenzstrahlen in einem vom Detektor 6 erfassbaren Wellenlängenbereich, beispielsweise zwischen 400 und 800 Nanometern erzeugt und ausgesendet werden. Dargestellt ist der Fluoreszenzstrahl 19', welcher auf den Detektor 6 trifft.

Die Verarbeitungseinheit 7 ist beispielsweise ausgebildet, den Sender 5 über die Verbindungsleitung 23 zum Erzeugen der ultravioletten elektromagnetischen Strahlen 19 anzusteuern. Die Strahlenquelle 26 des Senders 5 kann dann die ultravioletten elektromagnetischen Strahlen 19 erzeugen und auf die Leiterplatte 11 senden. Mittels des so mittels Fluoreszenz erzeugten Abbildes der Leiterplatte 11 kann auf einfache Weise nur eine Reflexionsstrahlung 19' von dem Detektor 6 erfasst werden, wodurch die Kante 12 auf einfache Weise in dem Bild erfasst werden kann. In einem darauffolgenden Schritt kann die Verarbeitungseinheit 7 den Sender 5 über die Verbindungsleitung 23 zum Erzeugen von beispielsweise weißer oder roter elektromagnetischer Strahlen 18 ansteuern. Mittels der so erzeugten elektromagnetischen Strahlen 18 kann dann ein Bilddatensatz mittels des Detektors 6 erzeugt werden, welcher ein detailliertes Abbild und so Intensitätswerte für jeden Objektort auf der Leiterplatte 11 repräsentiert, anhand dessen zwischen einer intakten Lötstelle 17 und einer defekten Lötstelle 16 unterschieden werden kann.

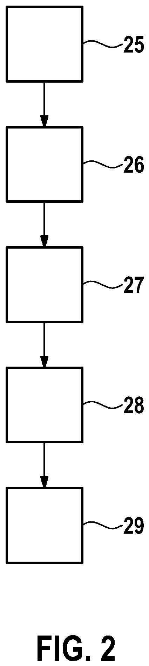

Figur 2 zeigt ein Verfahren zum Erfassen einer Lötverbindung, welche einen Anschluss eines quaderförmigen Bauelements, wie das in Figur 1 gezeigte Bauelement 10, mit einer Leiterplatte 11 verbindet.

Dazu werden in einem ersten Schritt 25 mittels eines Senders für elektromagnetische Strahlen elektromagnetische Strahlen erzeugt und auf die Leiterplatte und das Bauelement gesendet. In einem weiteren Schritt 26 wird von der Leiterplatte reflektierte elektromagnetische Strahlung erfasst und ein Bilddatensatz erzeugt, welcher die Leiterplatte - insbesondere mittels zueinander verschiedenen Intensitätswerten - repräsentiert.

In einem weiteren Schritt 27 wird - insbesondere mittels einer Mustererfassungseinheit - eine Kante des Bauelements ermittelt.

In einem weiteren Schritt 28 wird, von der zuvor im Schritt 27 ermittelten Kante ausgehend, eine Lötstelle erfasst. In einem weiteren Schritt 29 wird die Qualität der Lötstelle ermittelt, insbesondere, ob die Lötstelle eine intakte Lötstelle oder eine defekte, insbesondere eine kalte Lötstelle ist.

Die in Figur 1 dargestellte Verarbeitungseinheit 7 kann dazu einen Lötstellendiskriminator 30 aufweisen, welcher ausgebildet ist, in Abhängigkeit eines von einem Teil des Bilddatensatzes repräsentierten Intensitätswertes zwischen einer intakten und einer defekten Lötstelle zu unterscheiden und in Abhängigkeit eines Ergebnisses der Entscheidung ein I-O-Signal oder ein N-I-O-Signal zu erzeugen und ausgangsseitig auszugeben.

Die in Figur 1 gezeigte Erfassungsvorrichtung 2, insbesondere Verarbeitungseinheit 7, kann dazu den zuvor beschriebenen Lötstellendiskriminator 30 aufweisen. Das von dem Lötstellendiskriminator 30 erzeugte Ausgangssignal kann von der Erfassungsvorrichtung 2 ausgangsseitig über den Ausgang 9 an die Bildwiedergabeeinheit 3 gesendet werden und dort beispielsweise mittels des Warnsymbols 21 - im Falle des N-I-O-Signals - wiedergegeben werden.

## Patentansprüche

1. Erfassungssystem (1) zum Erfassen einer Lötverbindung (16, 17) eines elektronischen Bauelements (10), insbesondere integrierten Schaltkreises, wobei das Bauelement (10) ein Quaderförmiges Gehäuse aufweist, wobei das Erfassungssystem (1) eine Erfassungsvorrichtung (2) mit einem Sender (5) für elektromagnetische Strahlen (18, 19) und einen Detektor (6) für die elektromagnetischen Strahlen (18', 19') aufweist, und ausgebildet ist, mit dem Sender (5) elektromagnetische Strahlen (18, 19) zu erzeugen und auf das Bauelement zu senden und der Detektor (6) angeordnet und ausgebildet ist, von dem Bauelement (10) reflektierte elektromagnetische Strahlen (18', 19') zu erfassen und einen die reflektierten Strahlen (18', 19')repräsentierenden Bilddatensatz (34) zu erzeugen,
**dadurch gekennzeichnet, dass**
die Erfassungsvorrichtung (2) ausgebildet ist, aus dem Bilddatensatz (34) wenigstens einen eine Kante (12) des Bauelements (10) repräsentierenden Kanten-datensatz (35) zu erzeugen und im Bereich des Kantendatensatzes (35) wenigstens einen eine Lötstelle (16, 17) repräsentierenden Teil des Bilddatensatzes (34) zu ermitteln und in Abhängigkeit eines Intensitätswerts des Teils ein eine Qualität der Lötstelle (16, 17) repräsentierendes Qualitätssignal zu erzeugen und auszugeben, wobei das Erfassungssystem (1) wenigstens ein elektronisches Bauelement (10) umfasst und das Bauelement (10) mit einer Leiterplatte (11) lötverbunden ist und auf einer von der Leiterplatte (11) abweisenden Seite ausgehend von der Kante (12) des Gehäuses eine die elektromagnetischen Strahlen (18) reflektierende Beschichtung (13) aufweist, so dass die Kante (12) mittels des durch die Beschichtung (13) erzeugten Bildkontrastes erfasst werden kann, wobei die Beschichtung (13) ein Farbpigment, insbesondere Titandioxid aufweist.

2. Erfassungssystem (1) nach Anspruch 1,
**dadurch gekennzeichnet, dass**
die Beschichtung (13) fluoreszierend ausgebildet ist.

3. Erfassungssystem (1) nach Anspruch 2,
**dadurch gekennzeichnet, dass**
der Sender (5) ausgebildet ist, Fluoreszenz erzeugende Strahlen (19) unabhängig von Nicht-Fluoreszenz erzeugenden Strahlen (18) zu erzeugen.

4. Erfassungssystem (1) nach einem der vorhergehenden Ansprüche,
**dadurch gekennzeichnet, dass**
die Erfassungsvorrichtung (2) eine Mustererfassungseinheit (8) aufweist, welche ausgebildet ist, die Kante (12) - insbesondere mittels einer Polynomapproximation eines Polynoms ersten Grades - zu ermitteln.

5. Verfahren zum Erfassen einer defekten Lötstelle (16) eines quaderförmigen Bauelements (10), das mit einer Leiterplatte (11) lötverbunden ist,
bei dem auf die Leiterplatte (11) elektromagnetische Strahlen (18, 19) gesendet werden und wenigstens von dem Bauelement (10) reflektierte elektromagnetische Strahlen (18', 19') erfasst werden und ein die reflektierten Strahlen repräsentierender Bilddatensatz (34) erzeugt wird, und in dem Bilddatensatz (34) ein eine Kante (12) des Bauelements repräsentierender Teil (35) des Bilddatensatzes (34) erfasst wird und ausgehend von dem die Kante (12) repräsentierenden Teil (35) des Bilddatensatzes (34) eine Qualität einer Lötstelle (16, 17) ermittelt wird, wobei das Gehäuse des Bauelements (10) auf einer von der Leiterplatte (11) abweisenden Seite ausgehend von der Kante (12) eine die elektromagnetischen Strahlen (18, 19) reflektierende, eine Farbpigment aufweisende Beschichtung (13) aufweist, wobei mittels des durch die Beschichtung (13) erzeugten Bildkontrastes die Kante (12) erfasst wird.

6. Verfahren nach Anspruch 5,
bei dem ausgehend von der Kante (12) die Qualität der Lötstelle in Abhängigkeit eines Intensitätswertes eines die Lötstelle (16, 17) repräsentierenden Teils des Bilddatensatzes (34) ermittelt wird und ein I-O-Signal oder N-I-O-Signal in Abhängigkeit der ermittelten Qualität der Lötstelle (16, 17) erzeugt und ausgegeben wird.

7. Verfahren nach einem der Ansprüche 5 oder 6,
bei dem das Bauelement (10) auf einer von der Leiterplatte (11) abweisenden Seite ausgehend von der Kante (12) eine fluoreszierende Beschichtung (13) aufweist, und zum Erfassen der Kante (12) Fluoreszenz erzeugende Strahlen (19), insbesondere UV-Strahlen, erzeugt werden und auf die Leiterplatte (11) und das Bauelement (10) gesendet werden, und die Kante (12) in Abhängigkeit von reflektierten Fluoreszenzstrahlen (19') erfasst wird.

## Claims

1. Detection system (1) for detecting a soldered connection (16, 17) of an electronic component (10), in particular an integrated circuit, wherein the component (10) has a cuboidal housing, wherein the detection system (1) has a detection apparatus (2) having a transmitter (5) for electromagnetic beams (18, 19) and a detector (6) for the electromagnetic beams (18', 19') and is designed to generate electromagnetic beams (18, 19) using the transmitter (5) and to transmit said beams to the component, and the detector (6) is arranged and designed to detect electromagnetic beams (18', 19') reflected by the component (10) and to generate an image data set (34) representing the reflected beams (18', 19'),
**characterized in that**
the detection apparatus (2) is designed to generate at least one edge data set (35) representing an edge (12) of the component (10) from the image data set (34) and to determine, in the region of the edge data set (35), at least one part of the image data set (34) representing a soldered joint (16, 17) and to generate a quality signal representing a quality of the soldered joint (16, 17) on the basis of an intensity value of the part and to output said quality signal, wherein the detection system (1) comprises at least one electronic component (10) and the component (10) is connected to a printed circuit board (11) by means of soldering and has a coating (13) reflecting the electromagnetic beams (18) on a side facing away from the printed circuit board (11) starting from the edge (12) of the housing, with the result that the edge (12) can be detected by means of the image contrast produced by the coating (13), wherein the coating (13) has a colour pigment, in particular titanium dioxide.

2. Detection system (1) according to Claim 1,
**characterized in that**
the coating (13) is fluorescent.

3. Detection system (1) according to Claim 2,
**characterized in that**
the transmitter (5) is designed to generate beams (19) which produce fluorescence independently of beams (18) which do not produce fluorescence.

4. Detection system (1) according to one of the preceding claims,
**characterized in that**
the detection apparatus (2) has a pattern detection unit (8) which is designed to determine the edge (12), in particular by means of a polynomial approximation of a first-degree polynomial.

5. Method for detecting a defective soldered joint (16) of a cuboidal component (10) which is connected to a printed circuit board (11) by means of soldering,
in which electromagnetic beams (18, 19) are transmitted to the printed circuit board (11) and electromagnetic beams (18', 19') reflected at least by the component (10) are detected and an image data set (34) representing the reflected beams is generated, and a part (35) of the image data set (34) representing an edge (12) of the component is detected in the image data set (34) and a quality of a soldered joint (16, 17) is determined starting from that part (35) of the image data set (34) which represents the edge (12), wherein the housing of the component (10) has a coating (13) which reflects the electromagnetic beams (18, 19) and has a colour pigment on a side facing away from the printed circuit board (11) starting from the edge (12), wherein the edge (12) is detected by means of the image contrast produced by the coating (13).

6. Method according to Claim 5,
in which, starting from the edge (12), the quality of the soldered joint is determined on the basis of an intensity value of a part of the image data set (34) representing the soldered joint (16, 17), and an I-O signal or an N-I-O signal is generated and output on the basis of the determined quality of the soldered joint (16, 17).

7. Method according to either of Claims 5 and 6,
in which the component (10) has a fluorescent coating (13) on a side facing away from the printed circuit board (11) starting from the edge (12), and, in order to detect the edge (12), beams (19) which produce fluorescence, in particular UV beams, are generated and are transmitted to the printed circuit board (11) and to the component (10) and the edge (12) is detected on the basis of reflected fluorescent beams (19').

## Revendications

1. Système de détection (1) destiné à détecter une liaison brasée (16, 17) d'un composant électronique (10), notamment d'un circuit intégré, le composant (10) possédant un boîtier parallélépipédique, le système de détection (1) possédant un dispositif de détection (2) muni d'un émetteur (5) pour des rayons électromagnétiques (18, 19) et d'un détecteur (6) pour des rayons électromagnétiques (18', 19'), et étant configuré pour générer des rayons électromagnétiques (18, 19) avec l'émetteur (5) et les envoyer sur le composant et le détecteur (6) étant disposé et configuré pour détecter les rayons électromagnétiques (18', 19') réfléchis par le composant (10) et pour générer un jeu de données d'image (34) qui représente les rayons électromagnétiques (18', 19') réfléchis,
**caractérisé en ce que**
le dispositif de détection (2) est configuré pour générer, à partir du jeu de données d'image (34), au moins un jeu de données d'arête (35) qui représente au moins une arête (12) du composant (10) et, dans la zone du jeu de données d'arête (35), déterminer au moins une partie du jeu de données d'image (34) qui représente un point de brasage (16, 17) et, en fonction de la valeur d'intensité de la partie, générer et délivrer un signal de qualité qui représente une qualité du point de brasage (16, 17), le système de détection (1) comportant au moins un composant électronique (10) et le composant (10) étant relié par brasage à un circuit imprimé (11) et possédant, sur un côté s'écartant du circuit imprimé (11) à partir de l'arête (12) du boîtier, un revêtement (13) réfléchissant les rayons électromagnétiques (18), de sorte que l'arête (12) peut être détectée au moyen du contraste d'image généré par le revêtement (13), le revêtement (13) possédant un pigment coloré, notamment de l'oxyde de titane.

2. Système de détection (1) selon la revendication 1, **caractérisé en ce que** le revêtement (13) est réalisé de manière à être fluorescent.

3. Système de détection (1) selon la revendication 2, **caractérisé en ce que** l'émetteur (5) est configuré pour générer des rayons (19) produisant de la fluorescence indépendamment des rayons (18) ne produisant pas de la fluorescence.

4. Système de détection (1) selon l'une des revendications précédentes, **caractérisé en ce que** le dispositif de détection (2) possède une unité de détection de modèle (8) qui est configurée pour déterminer l'arête (12), notamment au moyen d'une approximation polynomiale d'un polynôme du premier degré.

5. Procédé de détection d'un point de brasage (16) défectueux d'un composant (10) parallélépipédique qui est relié par brasage à un circuit imprimé (11),
avec lequel des rayons électromagnétiques (18, 19) sont envoyés sur le circuit imprimé (11) et les rayons électromagnétiques (18', 19') réfléchis au moins par le composant (10) sont détectés et un jeu de données d'image (34) qui représente les rayons réfléchis est généré, et une partie (35) du jeu de données d'image (34) qui représente une arête (12) du composant est détectée dans le jeu de données d'image (34) et une qualité d'un point de brasage (16, 17) est déterminée à partir de la partie (35) du jeu de données d'image (34) qui représente l'arête (12), le boîtier du composant (10) possédant, sur un côté s'écartant du circuit imprimé (11) à partir de l'arête (12), un revêtement (13) possédant un pigment coloré qui réfléchit les rayons électromagnétiques (18, 19), l'arête (12) étant détectée au moyen du contraste d'image généré par le revêtement (13).

6. Procédé selon la revendication 5, avec lequel la qualité du point de brasage est déterminée à partir de l'arête (12) en fonction d'une valeur d'intensité d'une partie du jeu de données d'image (34) qui représente le point de brasage (16, 17) et un signal Conforme ou Non conforme est généré en fonction de la qualité déterminée du point de brasage (16, 17) et délivré.

7. Procédé selon l'une des revendications 5 et 6, dans lequel le composant (10) possède, sur un côté s'écartant du circuit imprimé (11) à partir de l'arête (12), un revêtement fluorescent (13) et, pour la détection de l'arête (12), des rayons (19) produisant de la fluorescence, notamment des rayons UV, sont générés et envoyés sur le circuit imprimé (11) et le composant (10), et l'arête (12) est détectée en fonction des rayons de fluorescence réfléchis (19').
